(19) **Europäisches Patentamt**
**European Patent Office**
**Office européen des brevets**

(11) **EP 2 660 260 B1**

(12) **EUROPEAN PATENT SPECIFICATION**

(45) Date of publication and mention
of the grant of the patent:
**12.09.2018 Bulletin 2018/37**

(51) Int Cl.:
**C08G 18/24** $^{(2006.01)}$    **G02B 1/04** $^{(2006.01)}$

(21) Application number: **11852983.3**

(22) Date of filing: **07.11.2011**

(86) International application number:
**PCT/JP2011/006207**

(87) International publication number:
**WO 2012/090372 (05.07.2012 Gazette 2012/27)**

(54) **COMPOSITION FOR OPTICAL MATERIAL**

ZUSAMMENSETZUNG FÜR EIN OPTISCHES MATERIAL

COMPOSITION POUR MATÉRIEL OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2010 JP 2010289589**

(43) Date of publication of application:
**06.11.2013 Bulletin 2013/45**

(73) Proprietor: **Mitsubishi Gas Chemical Company,
Inc.**
**Tokyo 100-8324 (JP)**

(72) Inventors:
• **TAKEMURA, Kouhei**
**Osaka-shi**
**Osaka 551-0022 (JP)**

• **HORIKOSHI, Hiroshi**
**Osaka-shi**
**Osaka 551-0022 (JP)**

(74) Representative: **Müller-Boré & Partner
Patentanwälte PartG mbB
Friedenheimer Brücke 21
80639 München (DE)**

(56) References cited:
EP-A1- 0 645 647     EP-A1- 2 641 928
EP-A2- 0 751 161     WO-A1-2008/047626
WO-A1-2010/001550    JP-A- H0 611 601
JP-A- H07 228 659    JP-A- H08 208 794
JP-A- 2004 339 329   JP-A- 2006 065 062
JP-A- 2009 226 742   US-A1- 2009 287 015

**Description**

The present invention relates to a composition for an optical material and so on, and more particularly to a composition for an optical material and so on that are suitable for use as optical materials such as plastic lenses, prisms, optical fibers, information recording substrates, and filters, and are specifically suited for use as plastic lenses. In particular, the present invention relates to an optical material having good optical properties and made of a polyurethane-based resin which is obtained through polymerization of a polymerizable composition including a polythiol compound and a polyiso(thio)cyanate compound.

A resin optical material is lighter and less fragile as compared to an optical material made of an inorganic material, and is stainable. Thus, it has been recently rapidly applied for various optical materials, such as spectacle lenses and camera lenses.

A resin for an optical material has been required to have higher performance. Specifically, there have been demands for improvements toward a higher refractive index, a higher Abbe's number, a lower specific gravity, a higher heat resistance and so on. To meet such demands, various resins for use in optical materials have been developed and put into use.

Of those, active proposals have been made over the use of polyurethane-based resins. One of the most typical examples of the polyurethane-based resins includes a resin obtained by reacting a polythiol compound with a polyiso(thio)cyanate compound, as illustrated in Patent Literatures 1 and 2. The resin is transparent and colorless, and excellent in such properties as impact resistance, stainability, and workability.

However, the polymerization-curing of the composition including these compounds has sometimes led to occurrence of polymerization unevenness called striae. In particular, striae have been significantly caused in high-powered lenses with sharp curves, and there has been a demand for a method of suppressing the striae.

PTL 1: JP H7-252207 A
PTL 2: JP H9-110956 A

An object of the present invention is to provide a composition for an optical material, the composition being capable of suppressing polymerization unevenness called striae, in particular, striae that are caused in high-powered lenses with sharp curves.

In view of the aforementioned circumstances, the inventors of the present invention have made extensive studies to find out that a composition for an optical material including: a polymerization catalyst having a mass ratio of dibutyltin dichloride to monobutyltin trichloride of 99.0/1.0 to 100.0/0.0 and containing dibutyltin dichloride by 99.0 mass% or more but 99.99 mass% or less and monobutyltin trichloride by 0.01 mass% or more but 1.0 mass% or less; a specific polythiol compound; a polyiso(thio)cyanate compound; and an acid phosphate ester can solve the aforementioned problem, to thereby complete the present invention. That is, the subject matters of the present invention are as follows:

<1> A composition for an optical material, comprising: a polymerization catalyst having a mass ratio $(Bu_2SnCl_2/BuSnCl_3)$ of dibutyltin dichloride $(Bu_2SnCl_2)$ to monobutyltin trichloride $(BuSnCl_3)$ of 99.0/1.0 to 100.0/0.0 and containing dibutyltin dichloride by 99.0 mass% or more but 99.99 mass% or less and monobutyltin trichloride by 0.01 mass% or more but 1.0 mass% or less; a polythiol compound; a polyiso(thio)cyanate compound, and an acid phosphate ester,

wherein the polythiol compound is at least one compound selected from the group consisting of: 1,2-bis[(2-mercaptoethyl)thio]-3-mercaptopropane; bis(mercaptomethyl)-3,6,9-trithia-1,11-undecanedithiol; pentaerythritol tetrakis(3-mercaptopropionate); bis(mercaptomethyl)sulfide; 1,3-bis(mercaptomethyl)benzene; and 1,1,3,3-tetrakis(mercaptomethylthio)propane, and

wherein the polythiol compound and the polyiso(thio)cyanate compound are used in a ratio of SH group/NCO(NCS) group which is in a range of 0.8 to 1.3.

<2> The composition for the optical material according to Item <1> above, in which the polyiso(thio)cyanate compound is at least one compound selected from the group consisting of:

2,5-bis(isocyanatomethyl)-bicyclo[2.2.1]heptane;
2,6-bis(isocyanatomethyl)-bicyclo[2.2.1]heptane;
bis(isocyanatomethyl)cyclohexane; dicyclohexylmethane diisocyanate; isophorone diisocyanate; 1,3-bis(isocyanatomethyl)benzene; and $\alpha,\alpha,\alpha',\alpha'$-tetramethylxylylene diisocyanate.

<3> An optical material obtained by polymerizing the composition for the optical material according to Item <1> above.
<4> The optical material according to Item <3> above, in which the composition for the optical material is subjected to annealing after polymerization.

According to the present invention, there can be provided a composition for an optical material capable of suppressing polymerization unevenness called striae, in particular, capable of suppressing the occurrence of striae in high-powered lenses with sharp curves, which hitherto has been difficult to suppress by conventional technologies.

In the present invention, a polyurethane-based resin for an optical material is manufactured through polymerization of a polymerizable composition comprising a polymerization catalyst having a mass ratio of dibutyltin dichloride to monobutyltin trichloride of 99.0/1.0 to 100.0/0.0; a polythiol compound; a polyiso(thio)cyanate compound; and an acid phosphate ester.

Generally, dibutyltin dichloride is obtained through a reaction of a Grignard reagent and tin tetrachloride. However, the reaction is a consecutive reaction, which fails to obtain dibutyltin dichloride alone without having monobutyltin trichloride mixed thereinto.

$$nRMgX + SnCl_4 \rightarrow R_nSnCl_{4-n} + nMgClX$$

Accordingly, the resulting product needs to be subjected to refining operation to remove monobutyltin trichloride mixed thereinto, in order to obtain dibutyltin dichloride alone. Exemplary methods for the refining operation include: distillation, recrystallization, reprecipitation, column separation operation, adsorbent treatment, and ion exchange resin treatment, with the distillation being preferred. The distillation may be performed under either normal pressure or reduced pressure, and preferably under reduced pressure. More preferably, under a pressure of from 0.01 Torr to 100 Torr, and further preferably under a pressure of from 0.1 Torr to 50 Torr. The distillation temperature is not particularly limited as long as the product can be distillated without being decomposed. The temperature is preferably in a range of from 50°C to 190°C, and more preferably in a range of from 100°C to 180°C.

The polymerization catalyst for use in the composition for the optical material of the present invention exhibits the effect of the present invention when the mass ratio ($Bu_2SnCl_2/BuSnCl_3$) of dibutyltin dichloride ($Bu_2SnCl_2$) to monobutyltin trichloride ($BuSnCl_3$) is 99.0/1.0 to 100.0/0.0, and more preferably 99.5/0.5 to 100.0/0.0. Further, the polymerization catalyst for use in the composition for the optical material of the present invention contains dibutyltin dichloride by 99.0 mass % or more and monobutyltin trichloride by 1.0 mass% or less, and most preferably contains dibutyltin dichloride by 99.5 mass% or more and monobutyltin trichloride by 0.5 mass% or less. According to the present invention, the polymerization catalyst contains dibutyltin dichloride by 99.99 mass % or less and monobutyltin trichloride by 0.01 mass% or more.

The amount of the aforementioned polymerization catalyst to be added varies depending on components and a mixture ratio of the composition and a polymerization-curing method, and thus cannot be unconditionally determined. The amount of the polymerization catalyst, relative to the total amount of the composition for the optical material, is generally not less than 0.001 mass% but not more than 5 mass%, preferably not less than 0.01 mass% but not more than 1 mass%, and most preferably not less than 0.01 mass% but not more than 0.5 mass%. The amount of the polymerization catalyst exceeding 5 mass% may lead to deterioration in refractive index and heat resistance when the composition is cured, and may even lead to the coloring of the cured composition. On the other hand, the amount of the polymerization catalyst falling below 0.001 mass% may lead to insufficient curing, failing to obtain sufficient heat resistance.

The polythiol compound for use in the present invention has at least two thiol groups per molecule.

Specific general examples of polythiol compounds include:

aliphatic polythiol compounds, such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercapto-1-propanol(2-mercaptoacetate), 2,3-dimercapto-1-propanol(3-mercaptopropionate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl)ether, ethylene glycol bis(2-mercaptoacetate), ethylene glycol bis(3-mercaptopropionate), trimethylolpropane bis(2-mercaptoacetate), trimethylolpropane bis(3-mercaptopropionate), pentaerythritol tetrakis(2-mercaptoacetate), pentaerythritol tetrakis(3-mercaptopropionate), and tetrakis(mercaptomethyl)methane;

aromatic polythiol compounds, such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol, 2,4-di(p-mercaptophenyl)pentane;

aromatic polythiol compounds each containing a sulfur atom in addition to a mercapto group, such as 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, and 1,3,5-tris(mercaptoethylthio)benzene, as well as the nuclear alkylated derivatives thereof;

aliphatic polythiol compounds each containing a sulfur atom in addition to a mercapto group, such as bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropyl)ethane, 1,3-bis(mercaptomethylthio)propane, 1,3-bis(2-mercaptoethylthio)propane, 1,3-bis(3-mercaptopropylthio)propane, 1,2,3-tris(mercaptomethylthio)propane, 1,2,3-tris(2-mercaptoethylthio)propane, 1,2,3-tris(3-mercaptopropylthio)propane, 1,2-bis[(2-mercaptoethyl)thio]-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, bis(mercaptomethyl)-3,6,9-trithia-1,11-undecanedithiol, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, bis(1,3-dimercaptopropyl)sulfide, 2,5-dimercapto-1,4-dithiane, 2,5-dimercaptomethyl-1,4-dithiane, 2,5-dimercaptomethyl-2,5-dimethyl-1,4-dithiane, bis(mercaptomethyl)disulfide, bis(mercaptoethyl)disulfide, and bis(mercaptopropyl)disulfide, as well as the esters of thioglycolates and mercaptopropionates thereof;

other aliphatic polythiol compounds each containing a sulfur atom and an ester bond in addition to a mercapto group, such as hydroxymethylsulfide bis(2-mercaptoacetate), hydroxymethylsulfide bis(3-mercaptopropionate), hydroxyethylsulfide bis(2-mercaptoacetate), hydroxyethylsulfide bis(3-mercaptopropionate), hydroxypropylsulfide bis(2-mercaptoacetate), hydroxypropylsulfide bis(3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), hydroxypropyldisulfide bis(2-mercaptoacetate), hydroxypropyldisulfide bis(3-mercaptopropionate), 2-mercaptoethylether bis(2-mercaptoacetate), 2-mercaptoethylether bis(3-mercaptopropionate), 1,4-dithiane-2,5-diol bis(2-mercaptoacetate), 1,4-dithiane-2,5-diol bis(3-mercaptopropionate), thiodiglycolic acid bis(2-mercaptoethyl ester), thiodipropionic acid bis(2-mercaptoethyl ester), 4,4-thiodibutylic acid bis(2-mercaptoethyl ester), dithiodiglycolic acid bis(2-mercaptoethyl ester), dithiodipropionic acid bis(2-mercaptoethyl ester), 4,4-dithiodibutylic acid bis(2-mercaptoethyl ester), thiodiglycolic acid bis(2,3-dimercaptopropyl ester), thiodipropionic acid bis(2,3-dimercaptopropyl ester), dithioglycolic acid bis(2,3-dimercaptopropyl ester), and dithiodipropionic acid bis(2,3-dimercaptopropyl ester);

heterocyclic compounds each containing a sulfur atom in addition to a mercapto group, such as 3,4-thiophenedithiol and 2,5-dimercapto-1,3,4-thiadiazole;

compounds each containing a hydroxy group in addition to a mercapto group, such as glycerin di(mercaptoacetate), 2,4-dimercaptophenol, 3,4-dimercapto-2-propanol, 1,3-dimercapto-2-propanol, 2,3-dimercapto-1-propanol, 1,2-dimercapto-1,3-butanediol, pentaerythritol tris(3-mercaptopropionate), pentaerythritol bis(3-mercaptopropionate), pentaerythritol tris(thioglycolate), dipentaerythritol pentakis(3-mercaptopropionate), hydroxymethyl-tris(mercaptoethylthiomethyl)methane, and 1-hydroxyethylthio-3-mercaptoethylthiobenzene;

compounds each having a dithioacetal or dithioketal skeleton, such as 1,1,3,3-tetrakis(mercaptomethylthio)propane, 1,1,2,2-tetrakis(mercaptomethylthio)ethane, 4,6-bis(mercaptomethylthio)-1,3-dithiacyclohexane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 2-(4,5-dimercapto-2-thiapentyl)-1,3-dithiacyclopentane, 2,2-bis(mercaptomethyl)-1,3-dithiacyclopentane, 2,5-bis(4,4-bis(mercaptomethylthio)-2-thiabutyl)-1,4-dithiane, 2,2-bis(mercaptomethylthio)-1,3-propanedithiol, 3-mercaptomethylthio-1,7-dimercapto-2,6-dithiaheptane, 3,6-bis(mercaptomethylthio)-1,9-dimercapto-2,5,8-trithianonane, 4,6-bis(mercaptomethylthio)-1,9-dimercapto-2,5,8-trithianonane, 3-mercaptomethylthio-1,6-dimercapto-2,5-dithiahexane, 2-(2,2-bis(mercaptomethylthio)ethyl)-1,3-dithiethane, 1,1,9,9-tetrakis(mercaptomethylthio)-5-(3,3-bis(mercaptomethylthio)-1-thiapropyl)-3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto -2,5,7,10-tetrathiaundecane, 3,4,8,9,13,14-hexakis(mercaptomethylthio)-1,16-dimercapto -2,5,7,10,12,15-hexathiahexadecane, 8-{bis(mercaptomethylthio)methyl}-3,4,12,13-tetrakis(mercaptomethylthio) -1,15-dimercapto-2,5,7,9,11,14-hexathiapentadecane, 4,6-bis{3,5-bis(mercaptomethylthio)-7-mercapto-2,6-dithiaheptylthio} -1,3-dithiane, 4-{3,5-bis(mercaptomethylthio)-7-mercapto-2,6-dithiaheptylthio} -6-mercaptomethylthio-1,3-dithiane, 1,1-bis{4-(6-mercaptomethylthio)-1,3-dithianylthio} -3,3-bis(mercaptomethylthio)propane, 1,3-bis{4-(6-mercaptomethylthio)-1,3-dithianylthio} -1,3-bis(mercaptomethylthio)propane, 1-{4-(6-mercaptomethylthio)-1,3-dithianylthio} -3-{2,2-bis(mercaptomethylthio)ethyl}-7,9-bis(mercaptomethylthio) -2,4,6,10-tetrathiaundecane, 1-{4-(6-mercaptomethylthio)-1,3-dithianylthio} -3-{2-(1,3-dithiethanyl)}methyl-7,9-bis(mercaptomethylthio) -2,4,6,10-tetrathiaundecane, 1,5-bis{4-(6-mercaptomethylthio)-1,3-dithianylthio} -3-{2-(1,3-dithiethanyl)}methyl-2,4-dithiapentane, 4,6-bis[3-{2-(1,3-dithiethanyl)}methyl-5-mercapto-2,4-dithiapentylthio] -1,3-dithiane, 4,6-bis{4-(6-mercaptomethylthio)-1,3-dithianylthio1,3-dithiane, 4-(4-(6-mercaptomethylthio)-1,3-dithianylthio} -6-{4-(6-mercaptomethylthio)-1,3-dithianylthio}-1,3-dithiane, 3-{2-(1,3-dithiethanyl)}methyl-7,9-bis(mercaptomethylthio) -1,11-dimercapto-2,4,6,10-tetrathiaundecane, 9-{2-(1,3-dithiethanyl)}methyl-3,5,13,15-tetrakis(mercaptomethylthio) -1,17-dimercapto-2,6,8,10,12,16-hexathiaheptadecane, 3-{2-(1,3-dithiethanyl)}methyl-7,9,13,12-tetrakis(mercaptomethylthio) -1,17-dimercapto-2,4,6,10,12,16-hexathiaheptadecane, 3,7-bis{2-(1,3-dithiethanyl)}methyl-1,9-dimercapto-2,4,6,8-tetrathianonane, 4-{3,4,8,9-tetrakis(mercaptomethylthio)-11-mercapto -2,5,7,10-tetrathiaundecyl}-5-mercaptomethylthio-1,3-dithiolane, 4,5-bis{3,4-bis(mercaptomethylthio)-6-mercapto-2,5-dithiahexylthio} -1,3-dithiolane, 4-{3,4-bis(mercaptomethylthio)-6-mercapto-2,5-dithiahexylthio} -5-mercaptomethylthio-1,3-dithiolane, 4-{3-bis(mercaptomethylthio)methyl-5,6-bis(mercaptomethylthio) -8-mercapto-2,4,7-trithiaoctyl}-5-mercaptomethylthio-1,3-dithiolane, 2-[bis{3,4-bis(mercaptomethylthio)-6-mercapto-2,5-dithiahexylthio}methyl] -1,3-dithiethane, 2- {3,4-bis(mercaptomethylthio)-6-mercapto -2,5-dithiahexylthio}mercaptomethylthiomethyl-1,3-dithiethane, 2-{3,4,8,9-tetrakis(mercaptomethylthio)-11-mercapto -2,5,7,10-tetrathiaundecylthio}mercaptomethylthiomethyl-1,3-dithiethane, 2-{3-bis(mercaptomethylthio)methyl-5,6-bis(mercaptomethylthio) -8-mercapto-2,4,7-trithiaoctyl}mercaptomethylthiomethyl-1,3-dithiethane, 4,5-bis{1-{2-(1,3-dithiethanyl)}-3-mercapto-2-thiapropylthio]-1,3-dithiolane, 4-[1-{2-(1,3-dithiethanyl)}-3-mercapto-2-thiapropylthio] -5-{1,2-bis(mercaptomethylthio)-4-mercapto-3-thiabutylthio}-1,3-dithiolane, 2-[bis{4-(5-mercaptomethylthio-1,3-dithiolanyl)thio}]methyl-1,3-dithiethane, and 4-{4-(5-mercaptomethylthio-1,3-dithiolanyl)thio} -5-[1-{2-(1,3-dithiethanyl)}-3-mercapto-2-thiapropylthio]-1,3-dithiolane, as well as the oligomers thereof;

compounds each having an orthotrithio formic acid ester skeleton, such as tris(mercaptomethylthio)methane, tris(mercaptoethylthio)methane, 1,1,5,5-tetrakis(mercaptomethylthio)-2,4-dithiapentane, bis(4,4-bis(mercaptomethylthio)-1,3-dithiabutyl) (mercaptomethylthio)methane, tris(4,4-bis(mercaptomethylthio)-1,3-dithiabutyl)methane, 2,4,6-tris(mercaptomethylthio)-1,3,5-trithiacyclohexane, 2,4-bis(mercaptomethylthio)-1,3,5-trithiacyclohexane, 1,1,3,3-tetrakis(mercaptomethylthio)-2-thiapropane, bis(mercaptomethyl)methylthio-1,3,5-trithiacyclohexane, tris((4-mercaptomethyl-2,5-dithiacyclohexyl-1-yl)methylthio)methane, 2,4-bis(mercaptomethylthio)-1,3-dithiacyclopentane, 2-mercaptoethylthio-4-mercaptomethyl-1,3-dithiacyclopentane, 2-(2,3-dimercaptopropylthio)-1,3-dithiacyclopentane, 4-mercaptomethyl-2-(2,3-dimercaptopropylthio)-1,3-dithiacyclopentane, 4-mercaptomethyl-2-(1,3-dimercapto-2-propylthio)-1,3-dithiacyclopentane, tris(2,2-bis(mercaptomethylthio)-1-thiaethyl)methane, tris(3,3-bis(mercaptomethylthio)-2-thiapropyl)methane, tris(4,4-bis(mercaptomethylthio)-3-thiabutyl)methane, 2,4,6-tris(3,3-bis(mercaptomethylthio)-2-thiapropyl)-1,3,5-trithiacyclohexane, and tetrakis(3,3-bis(mercaptomethylthio)-2-thiapropyl)methane, as well as the oligomers thereof; and

compounds each having an orthotetrathiocarbonic acid ester skeleton, such as 3,3'-di(mercaptomethylthio)-1,5-dimercapto-2,4-dithiapentane, 2,2'-di(mercaptomethylthio)-1,3-dithiacyclopentane, 2,7-di(mercaptomethyl)-1,4,5,9-tetrathiaspiro[4.4]nonane, and 3,9-dimercapto-1,5,7,11-tetrathiaspiro[5.5]undecane, as well as the oligomers thereof.

These exemplary compounds may generally be used alone, or in a mixture of two or more kinds thereof.

According to the present invention, the polythiol compound is at least one compound selected from the group consisting of: 1,2-bis[(2-mercaptoethyl)thio]-3-mercaptopropane, bis(mercaptomethyl)-3,6,9-trithia-1,11-undecanedithiol, pentaerythritol tetrakis(3-mercaptopropionate), bis(mercaptomethyl)sulfide, 1,3-bis(mercaptomethyl)benzene, and 1,1,3,3-tetrakis(mercaptomethylthio)propane.

The polyiso(thio)cyanate compound for use in the present invention is not particularly limited as long as the compound has at least two iso(thio)cyanate groups per molecule. Here, the "iso(thio)cyanate" herein refers to "isocyanate or isothiocyanate".

Specific examples of the polyiso(thio)cyanate compound include:

aliphatic polyisocyanate compounds, such as hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanate-4-isocyanatomethyloctane, bis(isocyanatoethyl)carbonate, bis(isocyanatoethyl)ether, lysine diisocyanatomethyl ester, and lysine triisocyanate;

alicyclic polyisocyanate compounds, such as 2,5-bis(isocyanatomethyl)-bicyclo[2.2.1]-heptane, 2,6-bis(isocyanatomethyl)-bicyclo[2.2.1]-heptane, bis(isocyanatomethyl)cyclohexane, dicyclohexylmethane diisocyanate, and isophorone diisocyanate;

polyisocyanate compounds each having an aromacyclic compound, such as 1,2-diisocyanatobenzene, 1,3-diisocyanatobenzene, 1,4-diisocyanatobenzene, 2,4-diisocyanatotolulene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylene bis(phenylisocyanate), 4,4'-methylene bis(2-methylphenylisocyanate), bibenzyl-4,4'-diisocyanate, bis(isocyanatophenyl)ethylene, 1,2-bis(isocyanatomethyl)benzene, 1,3-bis(isocyanatomethyl)benzene, 1,4-bis(isocyanatomethyl)benzene, 1,2-bis(isocyanatoethyl)benzene, 1,3-bis(isocyanatoethyl)benzene, 1,4-bis(isocyanatoethyl)benzene, 1,2-bis(isocyanatopropyl)benzene, 1,3-bis(isocyanatopropyl)benzene, 1,4-bis(isocyanatopropyl)benzene, $\alpha,\alpha,\alpha',\alpha'$-tetramethylxylylene diisocyanate, bis(isocyanatobutyl)benzene, bis(isocyanatomethyl)naphthalene, bis(isocyanatomethylphenyl)ether, bis(isocyanatoethyl)phthalate, and 2,6-di(isocyanatomethyl)furan;

sulfur-containing aliphatic polyisocyanate compounds, such as bis(isocyanatomethyl)sulfide, bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatoethyl)disulfide, bis(isocyanatopropyl)disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-thiapentane, 1,2,3-tris(isocyanatomethylthio)propane, 1,2,3-tris(isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanate methylthiophene, and isocyanatoethylthio-2,6-dithia-1,8-octane diisocyanate;

aromatic sulfide-based polyisocyanate compounds, such as 2-isocyanatophenyl-4-isocyanatophenyl sulfide, bis(4-isocyanatophenyl)sulfide, and bis(4-isocyanatomethylphenyl)sulfide;

aromatic disulfide-based polyisocyanate compounds, such as bis(4-isocyanatophenyl)disulfide, bis(2-methyl-5-isocyanatophenyl)disulfide, bis(3-methyl-5-isocyanatophenyl)disulfide, bis(3-methyl-6-isocyanatophenyl)disulfide, bis(4-methyl-5-isocyanatophenyl)disulfide, and bis(4-methoxy-3-isocyanatophenyl)disulfide;

sulfur-containing alicyclic polyisocyanate compounds, such as 2,5-diisocyanatotetrahydrothiophene, 2,5-diisocyanatomethyltetrahydrothiophene, 3,4-diisocyanatomethyltetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, and 4,5-diisocyanatomethyl-2-methyl-1,3-dithiolane;

aliphatic polyisothiocyanate compounds such as 1,2-diisothiocyanatoethane and 1,6-diisothiocyanatohexane; alicyclic polyisothiocyanate compounds such as cyclohexane diisothiocyanate; and aromatic polyisothiocyanate compounds such as 1,2-diisothiocyanatobenzene, 1,3-diisothiocyanatobenzene, 1,4-diisothiocyanatobenzene, 2,4-diisothiocyanatotoluene, 2,5-diisothiocyanato-m-xylene, 4,4'-methylene bis(phenylisothiocyanate), 4,4'-methylene bis(2-methylphenylisothiocyanate), 4,4'-methylene bis(3-methylphenylisothiocyanate), 4,4'-diisothiocyanatobenzophenone, 4,4'-diisothiocyanato-3,3'-dimethylbenzophenone, and bis(4-isothiocyanatophenyl)ether;

further, carbonyl polyisothiocyanate compounds, such as 1,3-benzenedicarbonyl diisothiocyanate, 1,4-benzenedicarbonyl diisothiocyanate, and (2,2-pyridine)-4,4-dicarbonyl diisothiocyanate; sulfur-containing aliphatic polyisothiocyanate compounds such as thiobis(3-isothiocyanatopropane), thiobis(2-isothiocyanatoethane), and dithiobis(2-isothiocyanatoethane);

sulfur-containing aromatic polyisothiocyanate compounds, such as 1-isothiocyanato-4-[(2-isothiocyanato)sulfonyl]benzene, thiobis(4-isothiocyanatobenzene), sulfonyl(4-isothiocyanatobenzene), and dithiobis(4-isothiocyanatobenzene); sulfur-containing alicyclic polyisothiocyanate compounds such as 2,5-diisothiocyanatothiophene, and 2,5-diisothiocyanato-1,4-dithiane; and

polyiso(thio)cyanate compounds each having an isocyanato group and an isothiocyanato group, such as 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanatophenyl-4-isothiocyanatophenyl sulfide, and 2-isocyanatoethyl-2-isothiocyanatoethyl disulfide.

Further, there may also be used a halogen substitute such as a chlorine substitute or a bromine substitute, an alkyl substitute, an alkoxy substitute, a nitro substitute, prepolymer-type modified products with a polyhydric alcohol, carbodiimide-modified products, urea-modified products, burette-modified products, dimerization or trimerization reaction products of those compounds, and so on.

However, the polyiso(thio)cyanate compound is not limited to these exemplary compounds. Further, these exemplary compounds may be used alone, or in a mixture of two or more kinds thereof.

Preferred among these exemplary compounds are 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, dicyclohexylmethane diisocyanate,

isophorone diisocyanate, 1,3-bis(isocyanatomethyl)benzene, and α,α,α',α'-tetramethylxylylene diisocyanate.

The polythiol compound and the polyiso(thio)cyanate compound are used in a ratio of SH group/NCO(NCS) group which is in a range of 0.8 to 1.3.

The composition for the optical material of the present invention mainly contains the polythiol compound and the polyiso(thio)cyanate compound. In addition to the above compounds, there may also be added, without any problem, arbitrary components including a catalyst other than the dibutyltin dichloride, an internal mold lubricant, an ultraviolet absorbent, and a bluing agent, as necessary, to thereby improve the practical performance of the resulting material. For example, a polyurethane-based lens may be manufactured by polymerizing a polythiol compound and a polyiso(thio)cyanate compound which have been injected together with other arbitrary components, as necessary, into a lens mold.

Preferred examples of the ultraviolet absorbent include a benzotriazole-based compound. Specific examples of particularly preferred compounds include: 2-(2-hydroxy-5-methylphenyl)-2H-benzotriazole; 5-chloro-2-(3,5-di-tert-butyl-2-hydroxyphenyl)-2H-benzotriazole; 2-(3-tert-butyl-2-hydroxy-5-methylphenyl)-5-chloro-2H-benzotriazole; 2-(3,5-di-tert-pentyl-2-hydroxyphenyl)-2H-benzotriazole; 2-(3,5-di-tert-butyl-2-hydroxyphenyl)-2H-benzotriazole; 2-(2-hydroxy-4-octyloxyphenyl)-2H-benzotriazole; and 2-(2-hydroxy-5-tert-octylphenyl)-2H-benzotriazole. Preferred examples of the bluing agent include an anthraquinone-based compound.

Further, when it is hard to take out, from the mold, a polymerized composition for an optical material of the present invention, a known external and/or internal mold release agent may be used or added to improve the mold release properties of the resultant cured material. Examples of the mold release agent include: a nonionic fluorine-based surface active agent; a nonionic silicon-based surface active agent; phosphate ester; acid phosphate ester; oxyalkylene-type acid phosphate ester; alkali metal salt of acid phosphate ester; alkali metal salt of oxyalkylene-type acid phosphate ester; metal salt of higher fatty acid; higher fatty acid ester; paraffin; wax; higher aliphatic amide; higher aliphatic alcohol; polysiloxanes; and an aliphatic amine ethylene oxide adduct. These exemplary compounds may be used alone, or in a mixture of two or more kinds thereof. The amount of the mold release agent to be added is generally 0.0001 mass% to 5 mass% relative to the total amount of the composition for the optical material. According to the present invention, the composition for an optical material comprises an acid phosphate ester.

Further, for the purpose of improving physical properties, usability, and polymerization reactivity of the polyurethane-based resin, there may also be added, in addition to the polythiol compound and the iso(thio)cyanate compound forming the urethane resin, one or more kinds of compounds, other than urethane-forming materials, such as an active hydrogen compound typified by amines, an epoxy compound, an olefin compound, a carbonate compound, an ester compound, metal, metal oxide, an organometallic compound, and inorganics.

In general, an optical material to be made of a polyurethane-based resin is manufactured by cast polymerization. Specifically, a polythiol compound and a polyiso(thio)cyanate compound are mixed together. The mixed solution (polymerizable composition) is subjected to defoaming as necessary by a suitable method and then injected into a mold die for an optical material, which is generally heated gradually from low temperature to high temperature to be polymerized. Thereafter, the mold is taken off to obtain an optical material.

In the present invention, it is preferred to subject the composition for the optical material to degassing treatment in advance. The degassing treatment is performed under reduced pressure, either before mixing, during mixing, or after mixing of a compound which can be reacted with some or all of the composition components, a polymerization catalyst, and additives. Preferably, the defoaming treatment is performed under reduced pressure during the mixing or after the mixing thereof. The treatment is performed under the conditions with a reduced pressure of from 0.001 torr to 50 torr, for 1 minute to 24 hours, at 0°C to 100°C. The degree of vacuum, which is preferably 0.005 torr to 25 torr, and more preferably 0.01 torr to 10 torr, may be varied within these ranges. The degassing time is preferably 5 minutes to 18 hours, and more preferably 10 minutes to 12 hours. The degassing temperature, which is preferably 5°C to 80°C, and more preferably 10°C to 60°C, may be varied within these ranges. In the degassing treatment, the resin composition may be subjected to stirring, air-blowing, vibration by ultrasonic waves and the like, so as to renew an interface of the resin composition, and these operations are preferred in terms of improving the degassing effect.

Further, the composition for the optical material and/or the respective raw materials before the mixing may be filtered through a filter having a pore size of about 0.05 μm to 10 μm or so for purification, which is preferred in terms of further improving the quality of the optical material of the present invention.

The composition for the optical material that has undergone the aforementioned reaction and treatment is injected into a glass or metal mold to be polymerized and cured by heating or irradiation of an active energy ray such as an ultraviolet light, and then removed from the mold, to thereby manufacture an optical material. The composition for the optical material is polymerized and cured preferably by heating, to thereby manufacture an optical material. In this case, the curing time is generally 0.1 hour to 200 hours and preferably 1 hour to 100 hours, and the curing temperature is generally -10°C to 160°C and preferably -10°C to 140°C. The polymerization may be performed by holding the polymerization temperature at a predetermined level for a predetermined time, raising the temperature at a rate of 0.1 °C/hour to 100°C/hour and lowering the temperature at a rate of 0.1 °C/hour to 100°C/hour, or a combination thereof. Further, in a manufacturing method of an optical material according to the present invention, the cured material may be subjected to annealing at a temperature of 50°C to 150°C for about 10 minutes to 5 hours or so after the polymerization, which is preferred in terms of removing the distortion of the optical material.

The polyurethane-based resin manufactured by the method of the present invention is lightweight and is excellent in impact resistance, and also has an excellent color phase. Therefore, the resin is suited for use in applications for optical materials such as lenses and prisms. In particular, the resin is extremely suited for use in lenses such as spectacle lenses and camera lenses.

Further, the optical material may also be subjected, as necessary, to physical or chemical treatment such as surface polishing, antistatic treatment, hard coating treatment, anti-reflective coating treatment, dying treatment, and photochromatic treatment, for the purpose of making improvements by, for example, imparting anti-reflection effect, imparting high hardness, improving wear resistance, improving chemical resistance, imparting antifog property, and imparting fashionability.

EXAMPLES

In the following, the present invention is described in further detail with reference to Examples. However, the present invention is no way limited to the following Examples. The evaluations are made according to the following methods.

Striae: Ten lenses each having a lens diameter of 75 mm with a power of +10D were prepared, which were subjected to visual observation by Schlieren method. Evaluated as excellent is a case where none of the ten lenses had striae observed therein, evaluated as good is a case where nine out of the ten lenses had no striae observed therein, evaluated as fair is a case where 7 or 8 out of the ten lenses had no striae observed therein, and evaluated as poor was a case where 6 or less out of the ten lenses had no striae observed therein. Only the cases evaluated as excellent, good, and fair are acceptable.

The following methods are adopted to perform polymerization-curing.

(Polymerization Method A)

To 52 parts by weight of 1,3-bis(isocyanatomethyl)benzene (hereinafter referred to as Compound X), 0.05 part by weight of a polymerization catalyst composed of dibutyltin dichloride and monobutyltin trichloride, and 0.10 part by weight of dioctyl phosphate were mixed and dissolved at 10°C to 15°C. Further, 48 parts by weight of 1,2-bis[(2-mercaptoethyl)thio]-3-mercaptopropane (Compound A) was mixed thereto, so as to obtain a homogeneous solution. The mixed homogeneous solution was subjected to defoaming for 1 hour under 600 Pa, and then filtered by a PTFE filter of 1 $\mu$m. The filtered solution was injected into a mold of 70 mm in diameter with a power of +5D, and polymerized at temperatures from 40°C to 130°C over 24 hours. Thereafter, the mold was taken off to obtain an optical material.

(Polymerization Method B)

To 51 parts by weight of 1,3-bis(isocyanatomethyl)benzene (Compound X), 0.05 part by weight of a polymerization catalyst composed of dibutyltin dichloride and monobutyltin trichloride, and 0.10 part by weight of dioctyl phosphate were mixed and dissolved at 10°C to 15°C. Further, 49 parts by weight of bis(mercaptomethyl)-3,6,9-trithia-1,11-undecanedithiol (Compound B) was mixed thereto, so as to obtain a homogeneous solution. The mixed homogeneous solution was subjected to defoaming for 1 hour under 600 Pa, and then filtered by a PTFE filter of 1 $\mu$m. The filtered solution was injected into a mold of 70 mm in diameter with a power of +5D, and polymerized at temperatures from 40°C to 130°C over 24 hours. Thereafter, the mold was taken off to obtain an optical material.

(Polymerization Method C)

To 50.6 parts by weight of a mixture of 2,5-bis(isocyanatomethyl)-bicyclo[2.2.1]heptane and 2,6-bis(isocyanatomethyl)-bicyclo[2.2.1]heptane (hereinafter referred to as Compound Y), 0.06 part by weight of a polymerization catalyst composed of dibutyltin dichloride and monobutyltin trichloride, and 0.12 part by weight of dioctyl phosphate were mixed and dissolved at 10°C to 15°C. Further, 25.5 parts by weight of 1,2-bis[(2-mercaptoethyl)thio]-3-mercaptopropane (Compound A) and 23.9 parts by weight of pentaerythritol tetrakis(mercaptopropionate) (Compound C) were mixed thereto, so as to obtain a homogeneous solution. The mixed homogeneous solution was subjected to defoaming for 1 hour under 600 Pa, and then filtered by a PTFE filter of 1 $\mu$m. The filtered solution was injected into a mold of 70 mm in diameter with a power of +5D, and polymerized at temperatures from 40°C to 130°C over 24 hours. Thereafter, the mold was taken off to obtain an optical material.

(Polymerization Method D)

To 50.6 parts by weight of a mixture of 2,5-bis(isocyanatomethyl)-bicyclo[2.2.1]heptane and 2,6-bis(isocyanatomethyl)-bicyclo[2.2.1]heptane (Compound Y), 0.06 part by weight of a polymerization catalyst composed of dibutyltin dichloride and monobutyltin trichloride, and 0.12 part by weight of dioctyl phosphate were mixed and dissolved at 10°C to 15°C. Further, 25.5 parts by weight of bis(mercaptomethyl)-3,6,9-trithia-1,11-undecanedithiol (Compound B) and 23.9 parts by weight of pentaerythritol tetrakis(mercaptopropionate) (Compound C) were mixed thereto, so as to obtain a homogeneous solution. The mixed homogeneous solution was subjected to defoaming for 1 hour under 600 Pa, and then filtered by a PTFE filter of 1 μm. The filtered solution was injected into a mold of 70 mm in diameter with a power of +5D, and polymerized at temperatures from 40°C to 130°C over 24 hours. Thereafter, the mold was taken off to obtain an optical material.

(Preparation of Polymerization Catalyst)

A polymerization catalyst containing dibutyltin dichloride by 94.0 mass% and monobutyltin trichloride by 6.0 mass% was distilled under 0.1 Torr to 50 Torr at 50°C to 200°C for 0.5 hour to 48 hours, to thereby prepare polymerization catalysts each containing monobutyltin trichloride by 0.4 mass%, 0.9 mass%, or 2.8 mass%, respectively (the content was measured through Gas Chromatography).

(Example 1)

Using the polymerization catalyst containing dibutyltin dichloride by 99.6 mass% and monobutyltin trichloride by 0.4 mass%, the curing was performed by the Polymerization Method A. The observation result was evaluated as excellent as to the suppression of striae. The evaluation results are shown in Table 1.

(Examples 2 to 4)

Using the polymerization catalyst containing dibutyltin dichloride by 99.6 mass% and monobutyltin trichloride by 0.4 mass%, the curing was performed by the Polymerization Method shown in Table 1. Table 1 shows the evaluation results.

(Examples 5 to 8)

Using the polymerization catalyst containing dibutyltin dichloride by 99.1 mass% and monobutyltin trichloride by 0.9 mass%, the curing was performed by the Polymerization Method shown in Table 1. Table 1 shows the evaluation results.

(Comparative Examples 1 to 4)

Using the polymerization catalyst containing dibutyltin dichloride by 94.0 mass% and monobutyltin trichloride by 6.0 mass%, the curing was performed by the Polymerization Method shown in Table 1. Table 1 shows the evaluation results.

[Table 1]

| Example | $Bu_2SnCl_2$/ $BuSnCl_3$ (mass ratio) | Content of Monobutyltin Trichloride in Polymerization Catalyst (mass%) | Polymerization Method | Striae |
|---|---|---|---|---|
| Example 1 | 99.6/0.4 | 0.4 | A | Excellent |
| Example 2 | 99.6/0.4 | 0.4 | B | Excellent |
| Example 3 | 99.6/0.4 | 0.4 | C | Excellent |
| Example 4 | 99.6/0.4 | 0.4 | D | Excellent |
| Example 5 | 99.1/0.9 | 0.9 | A | Good |
| Example 6 | 99.1/0.9 | 0.9 | B | Good |
| Example 7 | 99.1/0.9 | 0.9 | C | Good |

(continued)

| Example | Bu₂SnCl₂/ BuSnCl₃ (mass ratio) | Content of Monobutyltin Trichloride in Polymerization Catalyst (mass%) | Polymerization Method | Striae |
|---|---|---|---|---|
| Example 8 | 99.1/0.9 | 0.9 | D | Good |
|  |  |  |  |  |
|  |  |  |  |  |
|  |  |  |  |  |
|  |  |  |  |  |
| Comparative Example 1 | 94.0/6.0 | 6.0 | A | Poor |
| Comparative Example 2 | 94.0/6.0 | 6.0 | B | Poor |
| Comparative Example 3 | 94.0/6.0 | 6.0 | C | Poor |
| Comparative Example 4 | 94.0/6.0 | 6.0 | D | Poor |

It can be appreciated from the results shown in Table 1 that the use of the polymerization catalyst having a mass ratio of dibutyltin dichloride to monobutyltin trichloride of 99.0/1.0 to 100.0/0.0 is capable of suppressing the occurrence of striae.

**Claims**

1. A composition for an optical material, comprising:

a polymerization catalyst having a mass ratio of dibutyltin dichloride to monobutyltin trichloride of 99.0/1.0 to 100.0/0.0 and containing dibutyltin dichloride by 99.0 mass% or more but 99.99 mass% or less and monobutyltin trichloride by 0.01 mass% or more but 1.0 mass% or less;
a polythiol compound;
a polyiso(thio)cyanate compound; and
an acid phosphate ester,
wherein the polythiol compound is at least one compound selected from the group consisting of: 1,2-bis[(2-mercaptoethyl)thio]-3-mercaptopropane; bis(mercaptomethyl)-3,6,9-trithia-1,11-undecanedithiol; pentaerythritol tetrakis-(3-mercaptopropionate); bis(mercaptomethyl)sulfide; 1,3-bis(mercaptomethyl)-benzene; and 1,1,3,3-tetrakis(mercaptomethylthio)propane, and
wherein the polythiol compound and the polyiso(thio)cyanate compound are used in a ratio of SH group/NCO(NCS) group which is in a range of 0.8 to 1.3.

2. A composition for an optical material according to claim 1, wherein the poly-iso(thio)cyanate compound is at least one compound selected from the group consisting of: 2,5-bis(isocyanatomethyl)-bicyclo[2.2.1]heptane; 2,6-bis(isocyanatomethyl)-bicyclo[2.2.1]heptane; bis(isocyanatomethyl)cyclohexane; dicyclohexylmethane diisocyanate; isophorone diisocyanate; 1,3-bis(isocyanatomethyl)benzene; and $\alpha,\alpha,\alpha',\alpha$-tetramethylxylylene diisocyanate.

3. An optical material obtained by polymerizing a composition for an optical material according to claim 1.

4. An optical material according to claim 3, wherein the composition for the optical material is subjected to annealing after polymerization.

**Patentansprüche**

1.  Zusammensetzung für ein optisches Material, umfassend:

     einen Polymerisationskatalysator, der ein Massenverhältnis von Dibutylzinndichlorid zu Monobutylzinntrichlorid von 99,0/1,0 zu 100,0/0,0 aufweist und Dibutylzinndichlorid mit 99,0 Massen% oder mehr, jedoch 99,99 Massen% oder weniger, und Monobutylzinntrichlorid mit 0,01 Massen% oder mehr, jedoch 1,0 Massen% oder weniger, enthält;
     eine Polythiolverbindung;
     eine Polyiso(thio)cyanatverbindung; und
     einen sauren Phosphatester,
     wobei die Polythiolverbindung mindestens eine Verbindung, ausgewählt aus der Gruppe, bestehend aus: 1,2-Bis[(2-mercaptoethyl)thio]-3-mercaptopropan; Bis(mercaptomethyl)-3,6,9-trithia-1,11-undecandithiol; Pentaerythritol-tetrakis-(3-mercaptopropionat); Bis(mercaptomethyl)sulfid; 1,3-Bis(mercaptomethyl)-benzol; und 1,1,3,3-Tetrakis(mercaptomethylthio)propan, ist, und
     wobei die Polythiolverbindung und die Polyiso(thio)cyanatverbindung in einem Verhältnis von SH-Gruppen/NCO(NCS) Gruppen verwendet werden, welches in einem Bereich von 0,8 bis 1,3 liegt.

2.  Zusammensetzung für ein optisches Material nach Anspruch 1, wobei die Polyiso(thio)cyanatverbindung mindestens eine Verbindung, ausgewählt aus der Gruppe, bestehend aus: 2,5-Bis(isocyanatomethyl)-bicyclo[2.2.1]heptan; 2,6-Bis(isocyanatomethyl)-bicyclo[2.2.1]heptan; Bis(isocyanatomethyl)cyclohexan; Dicyclohexylmethandiisocyanat; Isophorondiisocyanat; 1,3-Bis-(isocyanatomethyl)benzol; und α,α,α',α'-Tetramethylxylylendiisocyanat, ist.

3.  Optisches Material, erhalten durch Polymerisieren einer Zusammensetzung für ein optisches Material nach Anspruch 1.

4.  Optisches Material nach Anspruch 3, wobei die Zusammensetzung für das optische Material einer Glühung nach Polymerisation unterzogen ist.

**Revendications**

1.  Composition pour matériau optique, comprenant :

     un catalyseur de polymérisation ayant un rapport massique du dichlorure de dibutylétain au trichlorure de monobutylétain situé dans l'intervalle allant de 99,0/1,0 à 100,0/0,0, et contenant le dichlorure de dibutylétain en une quantité de 99,0% en masse ou plus, mais 99,99% en masse ou moins, et le trichlorure de monobutylétain en une quantité de 0,01% en masse ou plus mais 1,0% en masse ou moins ;
     un composé polythiol ;
     un composé polyiso(thio)cyanate, et
     un ester de phosphate,
     où le composé polythiol est au moins un composé choisi parmi le groupe consistant en : le 1,2-bis[(2-mercaptoéthyl)thio]-3-mercaptopropane ; le bis(mercaptométhyl)-3,6,9-trithia-1,11-undécanedithiol ; le tétrakis(3-mercaptopropionate) de pentaérythritol ; le bis(mercaptométhyl)sulfure ; le 1,3-bis(mercaptométhyl)benzène, et le 1,1,3,3-tétrakis(mercaptométhylthio)propane, et
     où le composé polythiol et le composé polyiso(thio)cyanate sont utilisés en un rapport groupes thiol/groupes NCO(NCS) situé dans l'intervalle allant de 0,8 à 1,3.

2.  Composition pour matériau optique selon la revendication 1, où le composé polyiso(thio)cyanate est au moins un composé choisi parmi le groupe consistant en :
     le 2,5-bis(isocyanatométhyl)bicyclo[2.2.1]heptane ; le 2,6-bis(isocyanatométhyl)-bicyclo[2.2.1]heptane ; le bis(isocyanatométhyl)cyclohexane ; le dicyclohexyl-méthanediisocyanate ; l'isophoronediisocyanate ; le 1,3-bis(isocyanatométhyl)-benzène ; et le α,α,α',α',-tétraméthylxylylènediisocyanate.

3.  Matériau optique obtenu par polymérisation d'une composition pour matériel optique selon la revendication 1.

4.  Matériau optique selon la revendication 3, où la composition pour matériau optique est soumise à un recuit après polymérisation.

**EP 2 660 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7252207 A

- JP H9110956 A